Europäisches Patentamt

European Patent Office

Office européen des brevets

(11) Publication number: **0 167 214 B1**

## EUROPEAN PATENT SPECIFICATION

(45) Date of publication of patent specification: **09.10.91**   (51) Int. Cl.⁵: **A23L 1/226**

(21) Application number: **85201057.8**

(22) Date of filing: **01.07.85**

(54) **Sugar simulating compounds.**

(30) Priority: **02.07.84 EP 84200960**

(43) Date of publication of application:
**08.01.86 Bulletin 86/02**

(45) Publication of the grant of the patent:
**09.10.91 Bulletin 91/41**

(84) Designated Contracting States:
**BE CH DE FR GB IT LI NL SE**

(56) References cited:
**CH-A- 549 958**
**DE-A- 1 915 788**
**DE-A- 1 955 390**

(73) Proprietor: **PFW (NEDERLAND) B.V.**
**Nijverheidsweg 60**
**NL-3771 ME Barneveld(NL)**

(72) Inventor: **Cohen, Amnon Mordechai**
**Spreeuwenstraat 201**
**NL-3815 SV Amersfoort(NL)**
Inventor: **Grainger, Brian Trevor**
**13 Allerton Avenue**
**Middletown New York 10940(US)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

## Description

The present invention relates in one of its embodiments to edible materials and beverages containing non-nutritive sweeteners.

The importance of sweetness is one of the major factors in the palatability of foodstuffs and is well recognized and undisputed among modern nutritionists. Previously sweetness was promoted almost exclusively by natural sugars. In recent years, however, the rapid growth in the consumption of low-calorie soft drinks and dietetic food in general, resulted in a great deal of studies directed at finding new non-nutritive sweeteners or non-nutritive sweetness enhancers to diminish the amount of natural nutritive sweeteners in food, while maintaining the same total sweetness, e.g. as disclosed in United States Patent Specification No. 4,288,464 for maltol as a sweetness enhancer. It is well known, however, that, for instance, beverages such as coffee, tea, fruit juices, carbonated soft drinks, and like, containing high intensity non-nutritive sweeteners, are generally less well accepted than those containing carbohydrate sweeteners, because they lack the typical impression of natural sugar. It is one of the objects of the present invention to provide a method for simulating the presence of substantial amounts of carbohydrate sweeteners in edible materials and beverages in which the carbohydrate sweetener has been substantially or even fully replaced by a quantity of a high-intensity non-nutritive sweetener, equivalent in sweetness to the carbohydrate replaced.

It has now been found that 2-ethyl-5-methyl-4-hydroxy-3[2H] furanone and its tautomeric isomer 5-ethyl-2-methyl-4-hydroxy-3[2H] furanone exhibit a sugar simulating effect when used in conjunction with one or more high-intensity non-nutritive sweeteners. Thus the addition of 2-ethyl-5-methyl-4-hydroxy-3 [2H] furanone and/or its isomer 5-ethyl-2-methyl-4-hydroxy-3 [2H] furanone to an edible material or a beverage sweetened with such a high-intensity sweetener or mixtures thereof results in an impression of the edible material or beverage being sweetened with a carbohydrate sweetener without its flavor being affected to any great extent.

2-Ethyl-5-methyl-4-hydroxy-3[2H] furanone and its tautomeric isomer 5-ethyl-2-methyl-4-hydroxy-3 [2H] furanone are known flavoring ingredients which have found an increasing acceptance after their discovery and isolation from soy sauce by Nunomura et al. (Agric. Biol. Chem. 40 (1976) 491 and 44 (1980) 339. These furanones have been widely utilized for the reconstitution of good quality flavors. Their use as flavoring agents has been described in, for example, German Offenlegungsschrift 1,915,788 for bakery products, Dutch Patent Publication 70,04150 for meat flavors and Swiss Patent 549,958 for tobacco flavoring.

According to the preferred embodiment of the present invention, the sugar simulating effect can be achieved by the addition of between 0,01-2 ppm by weight of 2-ethyl-5-methyl-4-hydroxy-3 [2H] furanone and/or its isomer 5-ethyl-2-methyl-4-hydroxy-3[2H] furanone to an edible material or a beverage containing a non-nutritive high-intensity sweetener. The range of proportions indicated above is not to be interpreted restrictively and lower or higher proportions can be used.

It is to be understood, however, that beyond a certain upper limit 2-ethyl-5-methyl-4-hydroxy-3[2H] furanone and/or its isomer 5-ethyl-2-methyl-4-hydroxy-3[2H] furanone due to their intrinsic flavoring properties start to develop a flavour-modifying effect. It is therefore a matter of appreciation for the flavorist to use 2-ethyl-5-methyl-4-hydroxy-3[2H] furanone and /or its isomer 5-ethyl-2-methyl-4-hydroxy-3[2H] furanone in such a way and proportion as will suit the specific sweetening and/or flavoring effects which are desired to be achieved.

2-Ethyl-5-methyl-4-hydroxy[2H] furanone and its tautomeric isomer 5-ethyl-2-methyl-4-hydroxy-3[2H] furanone can be prepared, for example, as described in British patent 1,601,933. In their pure state 2-ethyl-5-methyl-4-hydroxy-3[2H] furanone and its isomer 5-ethyl-2-methyl-4-hydroxy-3[2H] furanone are liquids, which can be utilized as such or more conveniently in solutions. 2-Ethyl-5-methyl-4-hydroxy-3 [2H] furanone and its isomer 5-ethyl-2-methyl-4-hydroxy-3[2H] furanone can than be added to the materials to which it is desired to confer a sugar simulating effect in the course of any of the steps of their manufacture.

Examples of high intensity non-nutritive sweeteners which, according to the present invention, can be combined with 2-ethyl-5-methyl-4-hydroxy-3[2H] furanone and/or its tautomeric isomer 5-ethyl-2-methyl-4-hydroxy-3[2H] furanone are Acesulfame K (registered trademark) which is the potassium salt of 6-methyl-1,2,3-oxathiazine-4[3H]-one 2,2 -dioxide, Aspartame (registered trademark), which is N-L-α-aspartyl-L-phenylalamine methyl ester, Cyclamate(registered trademark), which is sodium cyclohexylsulfamate, Saccharin (registered trademark), which is 1,2-benziso thiazol-3[2H]-one 1,1 dioxide,chlorinated sucroses, chlorinated galactosucroses, and combinations thereof.

This invention can be practised in any edible material or beverage in which a sweet taste is desirable or conventional. Non-restrictive examples are cakes, pastry, biscuits and other sweet bakery products, chocolate, bonbons and other confectionery, jams, fruit compotes, desserts, sherbets, icecream, milk-shakes, yoghurt, coffee, tea, cocoa, fruit juices, carbonated soft drinks and the like. The invention can also be practised in medicinal or pharmaceutical, solid or liquid compositions in which a sweet taste is desirable, or in the coating of pills, tablets and the like.

The present invention is equally important for both the industry and the consumer by improving to a great extent the consumer acceptability of low- and reduced-calorie sweetened products, with the consequent reduction of metabolisable carbohydrate in the diet as recommended by leading nutritionists.

In an alternative embodiment, this invention relates to a sweetening composition comprising a combination of at least one non-nutritive sweetening agent and 2-ethyl-5-methyl-4-hydroxy-3[2H] furanone and/or its tautomeric isomer 5-ethyl-2-methyl-4-hydroxy-3 [2H] furanone, for example in the form of a powder, granules, pellets or a liquid composition. This form is suitable for domestic use, for example, for sweetening home brewed coffee and tea.

The invention can be illustrated by the following examples which are not intended to limit the invention in any way.

Example I

A carbonated beverage was prepared by mixing the following ingredients to produce drink A:

| | |
|---|---|
| Citric acid | 2.0 g |
| Citral, 1% in ethanol | 1.0 g |
| Sodium benzoate | 0.2 g |
| Acesulfame K (registered trademark) | 0.5 g |
| Carbonated water to 1 liter | |

To the same beverage 0.0005 g of 2-ethyl-5-methyl-4-hydroxy-3[2H] furanone and its tautomeric isomer 5-ethyl-2-methyl-4-hydroxy-3[2H] furanone was added to produce drink B. The beverages thus prepared were evaluated by a panel of experienced tasters, who were requested to express their opinion as to the sugary character of the two drinks. The panel members judged the taste of drink B as being much more sugarlike that that of drink A.

Example II

The preparation of the carbonated drinks of Example I was repeated, however, with 0.2 g Saccharin (registered trademark) substituted for 0.5 Acesulfame K (registered trademark) to produce drinks C and D, respectively. In this case the taste of drink D, containing 2-ethyl-5-methyl-4-hydroxy-3[2H] furanone and its isomer 5-ethyl-2-methyl-4-hydroxy-3[2H] furanone, was judged much more sugarlike than that of drink C by the panel members.

Example III

A low calorie whipped dessert E was prepared from the following ingredients:

| | |
|---|---|
| Whipping agent | 45.45 g |
| Skimmed milk powder | 25.00 g |
| Aspartame (registered trademark) | 0.23 g |
| Carrageenan | 1.43 g |
| Cream flavour | 0.3 g |
| Strawberry flavour | 0.3 g |
| Colour (10% on lactose) | 0.15 g |

3

The above ingredients were dry blended and then added to 250 g cold water. The mixture was whipped using an electric mixer for 3 minutes. The resulting dessert E was poured into serving dishes and refrigerated for 30 minutes before serving.

To the same formulation 0.0003 g of 2-ethyl-5-methyl-4-hydroxy-3[2H ] furanone and its tautomeric isomer 5-ethyl-2-methyl-4-hydroxy-3 [2H ] furanone was added to produce dessert F.

The desserts E and F were eveluated by a panel of experienced tasters who judged dessert F as being more sugarlike than dessert E.

Example IV

A low calorie sorbet G was prepared from the following ingredients:

| | |
|---|---|
| Polydextrose | 88.1 g |
| Aspartame (registered trademark) | 0.2 g |
| Whipping agent | 4.0 g |
| Carrageenan | 3.6 g |
| Citric acid | 2.6 g |
| Instant starch | 1.5 g |
| Lemon flavour | 0.4 g |

The above ingredients were dry blended and then added to 300 g cold water in an electric mixer bowl. They were mixed at low speed for 5 seconds, and at high speed for 3 minutes. The resulting mixture was poured into serving dishes and frozen for 3 hours before serving.

To the same formulation 0.0002 g of 2-ethyl-5-methyl-4-hydroxy-3[2H] furanone and its tautomeric isomer 5-ethyl-2-methyl-4-hydroxy-3 [2H] furanone was added to produce sorbet H.

The sorbets G and H were evaluated by a panel of experienced tasters who judged sorbet H to be more sugarlike than sorbet G.

Example V

Normal brewed English tea with milk was sweetened with 0.038% Acesulfame K (registered trademark), equivalent to 5% sugar, to prepare sample J. Sample K was prepared by adding 0.000005% (0.05 ppm) of 2-ethyl-5-methyl-4-hydroxy-3 [2H] furanone and its tautomeric isomer 5-ethyl-2-methyl-4-hydroxy-3 [2H] furanone to sample J.

A panel of twenty experienced tasters (seven normally taking sugar in tea, the remainder not) were asked to evaluate samples J and K in order to determine which sample was more sugarlike.

They determined statistically that sample K was more sugarlike than sample J.

**Claims**

1. An edible material or beverage containing at least one non-nutritive sweetening agent and a sugar simulating amount of 2-ethyl-5-methyl-4-hydroxy-3 [2H] furanone and/or its tautomeric isomer 5-ethyl-2-methyl-4-hydroxy-3 [2H] furanone.

2. A method of simulating the taste of sugar, which comprises the addition of a sugar simulating amount of 2-ethyl-5-methyl-4-hydroxy-3-[2H] furanone and/or its isomer 5-ethyl-2-methyl-4-hydroxy-3 [2H] furanone to materials containing non-nutritive sweetening agents.

3. An edible material or beverage according to claim 1 containing 0.01-2 ppm by weight of 2-ethyl-5-methyl-4-hydroxy-3 [2H] furanone and or its isomer 5-ethyl-2-methyl-4-hydroxy-3 [2H] furanone and having the same sugarlike taste as the foodstuff or beverage sweetened with sugar instead of non-nutritive sweeteners.

4. An edible material or beverage according to claim 1 in which the non-nutritive sweetening agent is Acesulfame K (registered trademark).

5. An edible material or beverage according to claim 1 in which the non-nutritive sweetening agent is Aspartame (registered trademark).

6. An edible material or beverage according to claim 1 in which the non-nutritive sweetening agent is Cyclamate (registered trademark).

7. An edible material or beverage according to claim 1 in which the non-nutritive sweetening agent is Saccharin (registered trademark).

8. An edible material or beverage according to claim 1 in which the non-nutritive sweetening agent is a chlorinated sucrose.

9. An edible material or beverage according to claim 1 in which the non-nutritive sweetening agent is a chlorinated galactosucrose.

10. The use of a combination of at least one non-nutritive sweetening agent and 2-ethyl-5-methyl-4-hydroxy-3 [2H] furanone and/or its tautomeric isomer 5-ethyl-2-methyl-4-hydroxy-3 [2H] furanone for sweetening materials.

11. A sweetening composition comprising a combination of at least one non-nutritive sweetening agent and 2-ethyl-5-methyl-4-hydroxy-3 [2H] furanone and/or its tautomeric isomer 5-ethyl-2-methyl-4-hydroxy-3 [2H] furanone.

**Revendications**

1. Matière comestible ou boisson contenant un ou plusieurs édulcorants non-nutritifs avec une proportion simulant le sucre de 2-éthyl-5-méthyl-4-hydroxy-3[2H]-furanone et/ou de sa forme tautomère la 5-éthyl-2-méthyl-4-hydroxy-3[2H]-furanone.

2. Méthode pour simuler le goût du sucre, consistant à ajouter une proportion appropriée de 2-éthyl-5-méthyl-4-hydroxy-3[2H]-furanone et/ou de son isomère la 5-éthyl-2-méthyl-4-hydroxy-3[2H]-furanone à des matières contenant des édulcorants non-nutritifs.

3. Matière comestible ou boisson selon la revendication 1 qui contient de 0,01 à 2 ppm en poids de 2-éthyl-5-méthyl-4-hydroxy-3[2H]-furanone et/ou de son isomère la 5-éthyl-2-méthyl-4-hydroxy-3[2H]-furanone et dont le goût sucré est le même que celui de l'aliment ou de la boisson qui auraient été édulcorés avec du sucre au lieu d'édulcorants non-nutritifs.

4. Matière comestible ou boisson selon la revendication 1, dont l'édulcorant non-nutritif est l'Acesulfame K.

5. Matière comestible ou boisson selon la revendication 1, dont l'édulcorant non-nutritif est l'Aspartame.

6. Matière comestible ou boisson selon la revendication 1, dont l'édulcorant non-nutritif est le Cyclamate.

7. Matière comestible ou boisson selon la revendication 1, dont l'édulcorant non-nutritif est la Saccharin.

8. Matière comestible ou boisson selon la revendication 1, dont l'édulcorant non-nutritif est un dérivé chloré du saccharose.

9. Matière comestible ou boisson selon la revendication 1, dont l'édulcorant non-nutritif est un dérivé chloré de galactosaccharose.

10. L'emploi d'une association d'un ou de plusieurs édulcorants non-nutritifs et de 2-éthyl-5-méthyl-4-hydroxy-3[2H]-furanone et/ou de sa forme tautomère la 5-éthyl-2-méthyl-4-hydroxy-3[2H]-furanone pour l'édulcoration de matières.

**11.** Composition édulcorante qui comprend une association d'un ou plusieurs édulcorants non-nutritifs et de 2-éthyl-5-méthyl-4-hydroxy-3[2H]-furanone et/ou de sa forme tautomère la 5-éthyl-2-méthyl-4-hydroxy-3[2H]-furanone.

**Patentansprüche**

**1.** Eßbares Material oder Getränk, enthaltend mindestens einen Süßstoff ohne Nährwert und eine Zucker-simulierende Menge von 2-Ethyl-5-methyl-4-hydroxy-3[2H]furanon und/oder seinem tautomeren Isomeren 5-Ethyl-2-methyl-4-hydroxy-3[2H]furanon.

**2.** Verfahren zur Simulierung des Geschmacks von Zucker, durch Zusatz einer Zucker-simulierenden Menge von 2-Ethyl-5-methyl-4-hydroxy-3[2H]furanon und/oder seinem Isomeren 5-Ethyl-2-methyl-4-hydroxy-3[2H]furanon zu Materialien, die Süßstoffe ohne Nährwert enthalten.

**3.** Eßbares Material oder Getränk nach Anspruch 1, enthaltend 0,01-2 ppm, bezogen auf das Gewicht, von 2-Ethyl-5-methyl-4-hydroxy-3[2H]furanon und/oder seinem Isomeren 5-Ethyl-2-methyl-4-hydroxy-3[2H]-furanon, mit dem gleichen zuckerähnlichen Geschmack wie das Nahrungsmittel oder Getränk, das mit Zucker anstelle von Süßstoffen ohne Nährwert gesüßt ist.

**4.** Eßbares Material oder Getränk nach Anspruch 1, in dem der Süßstoff ohne Nährwert Acesulfame K (eingetragenes Warenzeichen) ist.

**5.** Eßbares Material oder Getränk nach Anspruch 1, in dem der Süßstoff ohne Nährwert Aspartame (eingetragenes Warenzeichen) ist.

**6.** Eßbares Material oder Getränk nach Anspruch 1, in dem der Süßstoff ohne Nährwert Cyclamat (eingetragenes Warenzeichen) ist.

**7.** Eßbares Material oder Getränk nach Anspruch 1, in dem der Süßstoff ohne Nährwert Saccharin (eingetragenes Warenzeichen) ist.

**8.** Eßbares Material oder Getränk nach Anspruch 1, in dem der Süßstoff ohne Nährwert eine chlorierte Sucrose ist.

**9.** Eßbares Material oder Getränk nach Anspruch 1, in dem der Süßstoff ohne Nährwert eine chlorierte Galactosucrose ist.

**10.** Verwendung einer Kombination von mindestens einem Süßstoff ohne Nährwert und 2-Ethyl-5-methyl-4-hydroxy-3[2H]furanon und/oder seinem tautomeren Isomeren 5-Ethyl-2-methyl-4-hydroxy-3[2H]furanon als Süßstoffe.

**11.** Süßstoffzusammensetzung, umfassend eine Kombination von mindestens einem Süßstoff ohne Nährwert und 2-Ethyl-5-methyl-4-hydroxy-3[2H]furanon und/oder seinem tautomeren Isomeren 5-Ethyl-2-methyl-4-hydroxy-3[2H]furanon.